# EUROPEAN PATENT APPLICATION

(11) **EP 4 711 125 A1**
(43) Date of publication of application: **18.03.2026**
(21) Application number: 25185483.2
(22) Date of filing: 26.06.2025
(51) Int. Cl.: B32B 3/26, B32B 5/02, B32B 7/12, B32B 23/06, B32B 23/10, B32B 29/00, B32B 29/06, A47J 31/36, B65D 85/804

(54) **BREAKABLE FILM FOR BEVERAGE EXTRACTION CAPSULES, METHOD OF MANUFACTURING THE SAME AND RELATED CAPSULE**

(30) Priority: 11.09.2024 IT 202400020209
(71) Applicant: Corapack S.R.L., 22040 Brenna (CO) (IT)
(72) Inventor: RADICE, Massimo, 22040 Brenna (CO) (IT); RADICE, Fabrizio, 22040 Brenna (CO) (IT)
(74) Representative: Faggioni, Carlo Maria

(57) **Abstract**

A breakable composite film, the manufacturing method thereof, and a related capsule for extractable substances are disclosed, wherein the film comprises:
a first support layer (2) of PLA-based nonwoven fabric, coupled, by means of a first adhesive layer (4), to
a cellulose based barrier layer (3), so as to define an inner side on said support layer (2) and an outer side on said barrier layer (3), wherein
said barrier layer (3) is coupled on the outer side, through a second adhesive layer (7), to a fracture control layer (5) based on microperforated paper having a plurality of micro-holes (6) with a diameter between 0.25 and 0.80 mm, and wherein
said adhesive is in an amount from 1.5 to 3.5 g/m², preferably between 2 and 2.5 g/m².

## Description

### FIELD OF THE INVENTION

The present invention relates to the field of single-dose capsules used for the production of beverages, for example for the extraction of coffee-based beverages. In particular, the present invention concerns a sealing film for capsules and the related method of manufacture.

### STATE OF THE PRIOR ART

Capsules for extractable substances-that is, capsules to be inserted into extraction machines with pressurized liquid-are traditionally composed of a main cup-shaped body, typically made of aluminum or low-cost plastic materials, with a mouth opening closed by a pierceable sealing film, typically made of a more fragile material such as an aluminum foil.

In recent years, much of the innovation effort in the field of capsules for extractable substances has focused on improving the disposal and recycling profile of the main product components, namely the film and the main cup-shaped body.

The same Applicant has disclosed in EP 3 388 229 an innovative film configuration, composed of recyclable and compostable materials, easily weldable to the material of the capsule body, which is also made of recyclable and compostable material, with excellent sealing properties and having a barrier to oxygen and the external atmosphere, protecting the contents of the capsule for long periods.

However, although the film constructed as in EP'229 is easily breakable with a typical operating pressure of beverage extraction machines (even without the use of devices with piercing elements), the Applicant has noted that there is room for improvement compared to the performance of capsules with conventional materials that are not easily recyclable.

In particular, there is a need to achieve greater control over the fracturing of the film, to prevent it from tearing completely, opening a wide gap that would inappropriately reduce the extraction pressure or otherwise make the behavior of the film less repeatable.

It has already been proposed to use a layer provided with micro-holes for films made of traditional materials, because the micro-holes locally weaken the layer and help to fracture the film along more controlled lines.

However, this technique involves a series of problems.

In cases where processing is envisaged after the assembly of the composite film, such as the use of laser devices to form holes or micro-incisions on the last layer of the film, there are always uncertainties regarding the depth of the incisions and, moreover, it is necessary to re-handle the composite at the end of the assembly to subject it to a further processing step, which negatively affects production costs. For example, EP3362377 discloses a capsule wherein the closing film has an innermost layer of PLA on which weakening perforations are provided, applied by laser.

In cases, instead, where the assembly of the composite film involves coupling a pre-perforated layer, there are technological problems in achieving a perfect coupling, which does not impair the performance of the perforated layer and does not risk causing the various layers of the film to stick together when it is wound into a roll or reel.

AU2009347087, on the other hand, discloses a capsule solution in which the closing layer of the film has micro-holes, which, however, are intended for the passage of the beverage to be extracted.

### PROBLEM AND SOLUTION

The underlying problem of the invention is therefore to provide a recyclable breakable film and related beverage extraction capsule that overcomes the aforementioned drawbacks. In particular, the aim is to provide a composite film with a cellulose barrier-as described, for example, in EP'229-equipped with a perforated layer that allows improved control on fracturing under pressure, without imposing excessive manufacturing costs.

This objective is achieved through the features mentioned in the attached main claims.

The dependent claims describe preferred features of the invention.

### BRIEF DESCRIPTION OF THE DRAWINGS

Further features and advantages of the invention will become more apparent from the following detailed description of a preferred embodiment, provided purely by way of non-limiting example and illustrated in the accompanying drawings, in which:
Fig. 1 is a perspective side view of a section of film according to the present invention; and
Fig. 2 is a side elevation view of a portion of a perforating needle used in the manufacturing process of the film according to the invention, in which some exemplary dimensions are indicated.

### DETAILED DESCRIPTION OF A PREFERRED EMBODIMENT

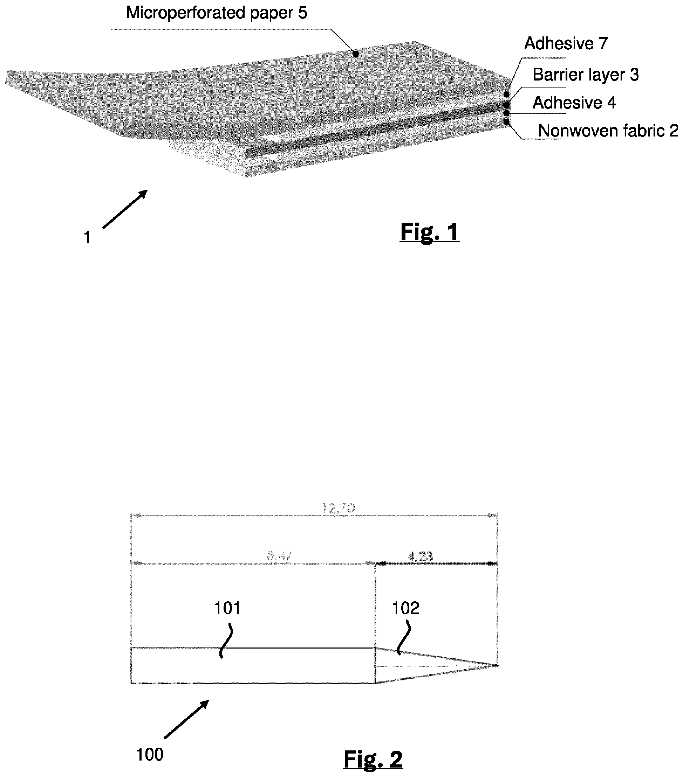

In Fig. 1, a composite sealing film 1 according to the present invention is depicted. The composite sealing film 1 is arranged to be sealed onto the rim of a cup-shaped body (not shown) that contains within it a substance (for example: ground coffee, ground tea, etc.) whose extraction with pressurized water, in a commercially available machine, provides a ready-to-drink beverage to a consumer.

The cup body is preferably made of recyclable or compostable plastic materials such as, for example, polylactic acid (PLA)-based polymers.

The film 1 is exemplarily formed, in a manner known per se (for example as described in EP'229), by a first carrier layer 2, of PLA-based nonwoven fabric, and one or more cellulose based barrier layers 3 (optionally metallized on the outermost surface), in this order from the inside to the outside (with respect to their arrangement once the film has been applied to the capsule body).

The first carrier layer 2 and the barrier layer 3 are coupled by means of an intermediate first adhesive layer 4 of suitable quality, preferably compostable, for example a casein-based or aliphatic adhesive, in an amount of the order of 1.5-4 g/m².

The second barrier layer 3 is preferably a cellulose-based layer having both sides coated with a PVdc-based coating, or PVOH, or silicon oxides, or aluminum oxides, or alternatively a metallization based on metallic aluminum. The thickness of this barrier layer is on the order of 15 to 25 µm, preferably in the range of 17-23 µm.

According to the invention, the film 1 further comprises a fracture control layer 5, applied to the outside of the barrier layer 3. In particular, the fracture control layer 5 is a layer based on microperforated cellulose paper, with a specific weight between 16 and 70 g/m², preferably between 25 and 50 g/m².

The microperforated paper features a plurality of micro-holes 6, for example evenly distributed over the surface-preferably from 1 to 9 holes per cm²-with a diameter between 0.25 and 0.80 mm (preferably between 0.35 and 0.60 mm).

The perforation of the microperforated paper layer 5 is carried out separately, prior to assembly into the composite film 1, preferably using needles 100 (see Fig. 2) having a stem 101 with a diameter between 0.75 mm and 1.80 mm, preferably 1.22 mm, and a tip 102 having a base/height ratio between 0.07 and 0.40.

To stably couple the barrier layer 3 with the fracture control layer 5, a second adhesive layer 7 is provided, for example a compostable adhesive such as casein or an aliphatic adhesive.

The application of this adhesive layer is particularly critical, because the fluidity of this component tends to cause seepage through the micro-holes 6, resulting in excessive clogging and, consequently, the risk of the film sticking to itself when, after the coupling of the various layers, it is wound into reels. Through extensive experimentation, the Applicant has succeeded in developing an ideal composition that has proven suitable for avoiding any inconvenience in the geometric condition of the micro-holes as indicated above.

First of all, in the coupling and lamination process, the adhesive is applied only to the outer side of the cellulose barrier layer and not to the side of the microperforated paper. The viscosity of the adhesive must be greater than 5500 mPa·s at 25°C, preferably 6500 mPa·s, in an amount of 1.5 to 3.5 g/m², preferably between 2 and 2.5 g/m². The adhesive 7 is preferably applied at a temperature between 35°C and 55°C.

Once the adhesive 7 has been applied to the outer side of the cellulose-based barrier layer 3, the lamination of the microperforated layer 5 must be carried out with a coupling pressure between 2 and 3 bar and, subsequently, the thus-coupled composite film can be wound into a reel with a winding tension of less than 250 N/linear meter. Typically, rewinding takes place immediately downstream of the lamination area.

The composite film 1 thus obtained can, in a manner known per se, be used to seal capsules containing extractable powdered substances (such as, for example, ground coffee, ground tea, etc.) and other ingredients (such as, for example, emulsifiers, preservatives, etc.).

A capsule provided with the composite film 1 according to the invention benefits from improved fracture performance. In particular, when extraction pressure is generated inside the capsule-by the insertion of suitable needles of an extraction machine-the film 1 tends to break in a controlled manner, without producing excessively wide tears, but instead defining a series of fractures that allow the extraction fluid to escape, which is filtered by the carrier layer 2, making the delivery of the extracted substance more repeatable and controlled in its macroscopic and organoleptic characteristics.

The breakable film and the related manufacturing method according to the invention have proven effective in obtaining an innovative capsule that offers excellent performance, with fracture control suitable for making the quality of the extracted beverages repeatable.

It is understood, however, that the invention should not be considered limited to the particular arrangement illustrated above, which constitutes only an exemplary embodiment thereof, and that various modifications are possible, all within the reach of a person skilled in the art, without thereby departing from the scope of protection of the invention itself, as defined by the following claims.

## Claims

1. Breakable composite sealing film (1) for capsules containing extractable substances, comprising:
a first carrier layer (2) of PLA-based nonwoven fabric, coupled, by means of a first adhesive layer (4), to
a cellulose based barrier layer (3), so as to define an inner side on said carrier layer (2) and an outer side on said barrier layer (3), **characterized in that**
said barrier layer (3) is coupled on the outer side, through a second adhesive layer (7), to a fracture control layer (5) based on microperforated paper having a plurality of micro-holes (6) with a diameter between 0.25 and 0.80 mm,
**and in that**
said adhesive is in an amount from 1.5 to 3.5 g/m², preferably between 2 and 2.5 g/m².

2. Composite sealing film as in claim 1, wherein said fracture control layer (5) has a specific weight between 16 and 70 g/m², preferably between 25 and 50 g/m².

3. Composite sealing film as in claim 1 or 2, wherein said cellulose-based barrier layer (3) comprises, on at least one of its surfaces, a coating based on any of PVdc, PVOH, silicon oxides, or aluminum oxides.

4. Method of manufacturing a breakable composite sealing film for capsules containing extractable substances, comprising:
providing a plurality of micro-holes (6) with a diameter between 0.25 and 0.80 mm on a paper based fracture control layer (5),
coupling a first carrier layer (2) of PLA-based nonwoven fabric with a cellulose based barrier layer (3) by means of a first adhesive layer (4), defining an outer side of said barrier layer (3) and an inner side of said support layer (2), **characterized by** the further steps of
applying a second adhesive (7) to said outer side of the barrier layer (3),
laminating under pressure said fracture control layer of microperforated paper (5) onto said barrier layer (3) with said adhesive interposed, said second adhesive (7) having a viscosity greater than 5500 mPa·s at 25°C, in an amount between 1.5 and 3.5 g/m² and with a coupling pressure between 2 and 3 bar.

5. Manufacturing method as in claim 4, wherein said second adhesive (7) is applied exclusively to said barrier layer (3) prior to said lamination step with application of pressure.

6. Manufacturing method as in claim 4 or 5, wherein said step of applying said second adhesive (7) is carried out at a temperature between 35°C and 55°C.

7. Manufacturing method as in any one of claims 4, 5, or 6, wherein said step of providing a plurality of micro-holes (6) is carried out by means of a plurality of needles (100) with a stem (101) having a diameter between 0.75 mm and 1.80 mm and a tip (102) having a base/height ratio between 0.07 and 0.40.

8. Manufacturing method as in any one of claims 4 to 7, wherein, subsequent to said lamination step, the composite film is wound into a reel with a winding tension of less than 250 N/per linear meter.

9. Capsule for extractable substances comprising a cup-shaped body having a sealed opening closed by a breakable composite sealing film (1) as in any one of claims 1 to 3 manufactured according to a method as in any one of claims 4 to 8.
